(19)

Europäisches
Patentamt
European
Patent Office
Office européen
des brevets

(11) **EP 1 933 480 A2**

(12) **EUROPEAN PATENT APPLICATION**

(43) Date of publication:
**18.06.2008 Bulletin 2008/25**

(51) Int Cl.:
*H04B 17/00* *(2006.01)*

(21) Application number: **07024201.1**

(22) Date of filing: **13.12.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **13.12.2006 JP 2006336279
12.12.2007 JP 2007321385**

(71) Applicant: **NTT DoCoMo, Inc.
Chiyoda-ku
Tokyo 100-6150 (JP)**

(72) Inventors:
 • **Shimomura, Tetsuto
  Tokyo 100-6150 (JP)**
 • **Okumura, Yuhihiko
  Tokyo 100-6150 (JP)**

(74) Representative: **HOFFMANN EITLE
Patent- und Rechtsanwälte
Arabellastrasse 4
81925 München (DE)**

(54) **Mobile communication terminal and mobile communication method**

(57)    Provided is a mobile communication terminal including: a moving-state obtaining section for obtaining a moving state of the mobile communication terminal; a path search section for determining a measurement condition including any one of the number of known signals and an interval for measuring the radio signal according to the moving state obtained by the moving-state obtaining section; and a reception-level measuring section and a demodulator for performing signal processing by use of the radio signal under the measurement condition determined by the path search section. The known signal is used for estimating the influence of propagation path of the received radio signal, and has setting values that are known by both the transmitting side and receiving side.

FIG. 2

## Description

### CROSS REFERENCE TO RELATED APPLICATION

This application is based upon and claims the benefit of priority from the prior Japanese Patent Applications No. 2006-336279 filed on December 13, 2006 and No. 2007-321385 filed on December 12, 2007; the entire contents of which are incorporated herein by reference.

### BACKGROUND OF THE INVENTION

1. Field of the Invention

The present invention relates to a mobile communication terminal and a mobile communication method capable of controlling communications according to states of radio signals including a known signal by receiving the radio signals from radio base stations. The known signal is a signal used for estimating an influence caused by a propagation path of a received radio signal. Setting values for the known signal are known by both the transmitting side and the receiving side.

2. Description of the Related Art

For a mobile communication system, a conventional method has been known, in which time-series data of received electric field strength of radio signals received from radio base stations are used in order to allow a mobile communication terminal to select the most suitable radio base station taking into account the moving direction and moving speed of the mobile communication terminal (for example, refer to Japanese Patent No. 3481101 (p. 3 and Fig. 4 thereof)).

Specifically, on the basis of the inclination of the received electric field strength specified by the time-series data, the mobile communication terminal selects the radio base station which is expected to provide the most suitable received electric field strength.

In a mobile communication system employing the code division multiple access (CDMA) system, a mobile communication terminal is configured to measure path timings and the reception levels of received radio signals. A path timing indicates the time difference between a timing in one of multipaths separated by despreading processing and a reference timing.

In measuring the path timings and the reception levels, an increase in the number of pilot symbols (known signals) suppresses influence of fading or the like, thereby improving the S/N ratio of the radio signal. Here, a pilot symbol is a symbol which is used for estimating an influence of a propagation path of the received radio signal. Setting values for the pilot symbol are known by both the transmitting side and the receiving side. Thus, accuracy in measuring the path timings and the reception levels can be improved.

On the other hand, an increase in the number of pilot symbols to be used in the measurement elongates measurement time for the path timings and the reception levels. Hence, when the mobile communication terminal is moving in a high speed, for example, at 100 km/h or more (hereinafter referred to as "time of high-speed movement"), accuracy in measuring the path timings and the reception levels are degraded since the phase of the pilot symbol of the measurement target is shifted due to the Doppler shift. Such degradation in measurement accuracy is likely to occur especially when the mobile communication terminal receives a radio signal of a high frequency band, such as the 2 GHz band, while moving at an extremely high speed (for example, at 200 km/h or more).

Moreover, assume that measurement time of the path timings and the reception levels is shortened in order to avoid the problem of phase shift in the pilot symbol to be measured. In such a case, the S/N ratio of the radio signal is deteriorated while the mobile communication terminal does not move at all or is moving at a low speed (referred to below as "time of low-speed movement"), leading to degradation in accuracy in measuring the path timing.

In other words, there has been a problem that ensuring accuracy in measuring the path timings and the reception levels is difficult at both times of high-speed movement and low-speed movement of the mobile communication terminal.

The mobile communication terminal is unable to appropriately select some of multipaths for demodulation when accuracy in measuring the path timings is degraded. Additionally, the mobile communication terminal is unable to select a suitable radio base station when accuracy in measuring the reception levels is degraded. For these reasons, communication quality is deteriorated (for example, deterioration in SIR and BLER, and lowered throughput).

### BRIEF SUMMARY OF THE INVENTION

Thus, the present invention has been made in view of these trade-off situations, and aims to provide a mobile communication terminal and a mobile communication method capable of improving communication quality by ensuring accuracy in measuring the path timings and the reception qualities regardless of the moving speed.

In order to solve the above problems, the present invention is characterized in the following aspects. A first aspect of the present invention is a mobile communication terminal (mobile communication terminal 100) for receiving a radio signal (radio signal S) including a known signal (pilot symbol P) from a radio base station, and then for performing predetermined signal processing according to a state of the received radio signal. Here, the known signal is a signal which is used to estimate an influence of a propagation path of the received radio signal, and the known signal has setting values that are known by both the transmitting side and the receiving side. The mobile communication terminal includes a moving-state obtaining section (moving-state obtaining section 120), a measurement-condition determination section (path search section 131), and a signal processor (reception-level measuring section 135 and demodulator 137). Specifically, the moving-state obtaining section is configured to obtain a moving state (such as a moving velocity v) of the mobile communication terminal. The measurement-condition determination section is configured to determine a measurement condition including the number of known signals (number of pilot symbols $N_S$) or an interval for measuring the radio signal (measurement interval $Tm$) according to the moving state obtained by the moving-state obtaining section. The signal processor is configured to perform signal processing by use of the radio signal under the measurement condition determined by the measurement-condition determination section.

According to the mobile communication terminal, a measurement condition is determined according to a moving state of the mobile communication terminal. Specifically, the measurement condition includes the number of known signals, that is, pilot symbols, and an interval for measuring the state of the radio signal.

Thus, at the time of high-speed movement, the mobile communication terminal can decrease the number of pilot symbols, and shorten the interval (period) for measuring the radio signal. Meanwhile, at the time of low-speed movement, the mobile communication terminal can increase the number of pilot symbols, and elongate the interval for measuring the radio signal.

In other words, according to the mobile communication terminal, accuracy in measuring the path timings and the reception levels can be ensured regardless of the moving velocity, so that communication quality can be improved.

A second aspect of the present invention is the mobile communication terminal according to the first aspect, in which the signal processor performs any one of: measurement of a path timing (path timing $T_p$) indicating the time difference between a timing in one of multipaths (multipaths MP1 and MP2, for example) and a predetermined reference timing (reference timing T); and measurement of the reception level of the radio signal and demodulation of the radio signal.

A third aspect of the present invention is the mobile communication terminal according to the first aspect, in which the moving-state obtaining section obtains a moving velocity (moving velocity v) of the mobile communication terminal. Moreover, in a case where the moving velocity obtained by the moving-state obtaining section is lower than a certain threshold (such as 100 km/h), the measurement-condition determination section increases the number of known signals used in measurement of the state of the radio signal. In contrast, in the case where the moving velocity obtained by the moving-state obtaining section is higher than a certain threshold (such as 200 km/h), the measurement-condition determination section decreases the number of known signals used in measurement of the state of the radio signal.

A fourth aspect of the present invention is the mobile communication terminal according to the first aspect, further including a measurement condition table (measurement condition table TB) in which the moving state, the number of known signals and the measurement interval are in association with each other. Here, the measurement-condition determination section determines the measurement condition in reference to the measurement condition table.

A fifth aspect of the present invention is a mobile communication method in which a radio signal including a known signal is received from a radio base station, and in which predetermined signal processing is performed according to a state of the received radio signal. The mobile communication method includes the steps of: obtaining a moving state of a mobile communication terminal; determining, on the basis of the obtained moving state, a measurement condition including any of the number of known signals and an interval for measuring the radio signal; and performing the signal processing by use of the radio signal under the determined measurement condition.

**BRIEF DESCRIPTION OF THE SEVERAL VIEWS OF THE DRAWINGS**

[Fig. 1] Fig. 1 is an overall schematic configuration diagram of a mobile communication system according to an embodiment of the present invention.
[Fig. 2] Fig. 2 is an overall functional block configuration diagram of the mobile communication system according to the embodiment of the present invention.
[Fig. 3] Fig. 3 is a detailed functional configuration diagram of a signal processor according to the embodiment of the present invention.
[Fig. 4] Fig. 4 is a flow chart of a moving-state obtaining operation by a mobile communication terminal according to the embodiment of the present invention.
[Fig. 5] Fig. 5 is a flow chart of a path-timing and reception-level obtaining operation by the mobile communication terminal according to the embodiment of the present invention.
[Fig. 6] Fig. 6 is a flow chart of a demodulation operation by the mobile communication terminal according to the embodiment of the present invention.
[Fig. 7] Fig. 7 is a diagram showing one example of multipath received at the mobile communication terminal according to the embodiment of the present invention.
[Fig. 8] Fig. 8 is a diagram showing one example of a measurement condition table according to the embodiment of the present invention.

## DETAILED DESCRIPTION OF THE INVENTION

Next, an explanation will be given for an embodiment of the present invention. The same or similar symbols are given to the same or similar portions in the description of the drawings below. It should be noted that the drawings are schematic, and that the dimensional ratios and the like are different from the actual ones.

Accordingly, specific dimensions and the like should be determined in consideration of the following description. In addition, portions in which dimensional relations and ratios between the drawings differ are included, as a matter of course.

(Overall schematic configuration of mobile communication system)

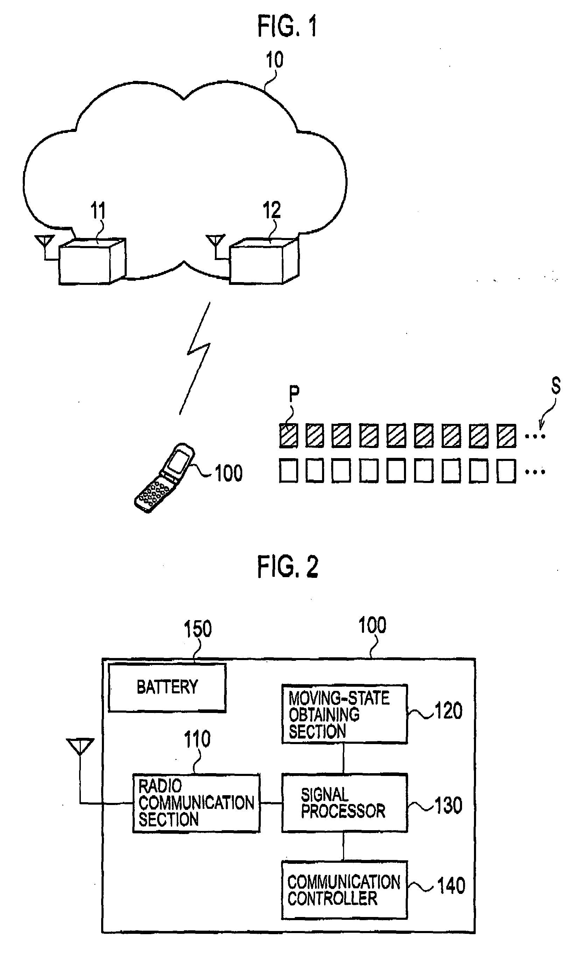

Fig.1 is an overall schematic configuration diagram of a mobile communication system according to the present invention. As shown in Fig. 1, the mobile communication system according to the present invention is configured of a communication network 10, radio base stations 11 and 12, and a mobile communication terminal 100.

The communication network 10 is a wired communication network for connecting the radio base stations 11 and 12.

The radio base stations 11 and 12 perform radio communication with the mobile communication terminal 100 according to a predetermined radio communication method. In the present embodiment, radio signals S of the 2 GHz band according to the code division multiple access (CDMA) system are transmitted and received between the radio base stations 11 and 12, and the mobile communication terminal 100. Specifically, radio signals S including pilot symbols P are transmitted and received between the radio base stations 11 and 12, and the mobile communication terminal 100. Here, the pilot symbol P is a symbol which is used for estimating an influence of a propagation path of the received radio signal S, and setting values for the pilot symbol P are known by both the transmitting side and the receiving side. Incidentally, the pilot symbol P constitutes a known signal in the present embodiment.

As described in "Application of wireless communication system 2 mobile communication (musen gijyutsu to sono ouyou 2 idoutai tsushin)" edited by Tatsuro Masamura (section 2-2-2, MARUZEN Co., Ltd.), a pilot symbol P is a symbol in which the modulation phase of transmission data is previously known in a receiving-side apparatus, such as the mobile communication terminal 100. The mobile communication terminal 100 employs the reception phase and amplitude of the pilot symbol P as a reference phase and amplitude. Additionally, as described in the document, in addition to the code multiplexed type, a time-multiplexed type or a frequency multiplexed type may also be employed as a configuration of the pilot symbol P.

The mobile communication terminal 100 receives a radio signal S from the radio base station 11 (or from the radio base station 12), and then performs signal processing according to the state of the received radio signal S. Here, one example of the signal processing is the measurement of a radio signal S, more particularly of a reception level L of the radio signal S.

(Functional block configuration of mobile communication terminal)

Next, an explanation will be given for a functional block configuration of the mobile communication terminal 100. Specifically, explanations will be given for an overall functional block configuration of the mobile communication terminal 100, and for a detailed functional block configuration of a signal processor.

Incidentally, the following explanations are mainly given for portions related to the present invention. Hence, it should be noted that the mobile communication terminal 100 may include functional blocks which are indispensable to implement the function of the apparatus (such as an operation key section and the like), the functional blocks being unillustrated, or descriptions of the functional blocks being omitted.

(1) Overall functional block configuration

Fig. 2 is an overall functional block configuration diagram of the mobile communication terminal 100. As shown in Fig. 2, the mobile communication terminal 100 includes a radio communication section 110, a moving-state obtaining section 120, a signal processor 130, a communication controller 140, and a battery 150.

The radio communication section 110 performs radio communication with the radio base stations 11 and 12 in accordance with the CDMA system. Specifically, the radio communication section 110 transmits and receives radio signals S to and from the radio base stations 11 and 12.

The moving-state obtaining section 120 obtains a moving state of the mobile communication terminal 100. Specifically, the moving-state obtaining section 120 obtains the moving state of the mobile communication terminal 100 by measuring and estimating a moving velocity $v$ of the mobile communication terminal 100.

For example, the moving-state obtaining section 120 estimates the moving velocity $v$ on the basis of a shifting amount of the phase of a pilot symbol P caused by the Doppler shift resulting from movement of the mobile communication terminal 100. Additionally, the moving-state obtaining section 120 may detect the moving velocity $v$ on the basis of the number of radio base stations (cells) detected per unit time, or on the basis of the frequency with which the mobile communication terminal 100 changes the cell.

Incidentally, the moving-state obtaining section 120 may measure the moving velocity $v$ by use of the global positioning system (GPS). Moreover, in a case where the mobile communication terminal 100 is mounted on an automobile or the like, the moving velocity $v$ may be measured by use of the velocity pulse or the like of the automobile.

Additionally, the moving-state obtaining section 120 may be provided with an acceleration sensor or an IC tag reader, and obtain the moving state by determining whether or not the mobile communication terminal 100 is moving.

The signal processor 130 performs processing related to the reception signal outputted from the radio communication section 110 and the transmission signal to be inputted to the radio communication section 110.

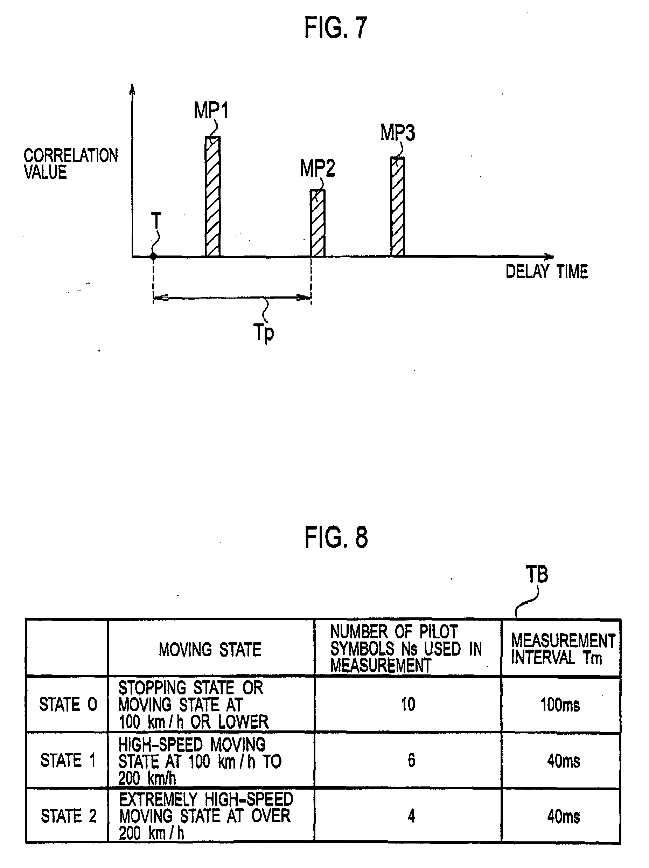

Specifically, the signal processor 130 measures a path timing $T_P$ indicating the time difference between a timing in one of multipaths (such as a multipath MP2) and the reference timing T, as shown in Fig. 7. Additionally, the signal processor 130 measures a reception level L of the radio signal S, that is, the RSCP or Ec/N0 of a pilot channel (not shown) included in the radio signal S, and performs demodulation on the radio signal S. Specific functions of the signal processor 130 will be explained later.

The communication controller 140 controls communication using the radio signal S. In particular, in the present embodiment, communication control is performed according to the measurement condition for the state of the radio signal S, the condition being determined by the signal processor 130.

Specifically, the communication controller 140 selects a radio base station having a satisfactory reception level L, and performs calling/receiving processing of voice calls through the selected radio base station. Moreover, the communication controller 140 performs control related to handover, and performs transmission power control of the radio base station on the basis of a communication quality (SIR and BLER) measurement result.

The battery 150 supplies required power to each of the radio communication section 110, the moving-state obtaining section 120, the signal processor 130 and the communication controller 140.

(2) Detailed functional block configuration of signal processor 130

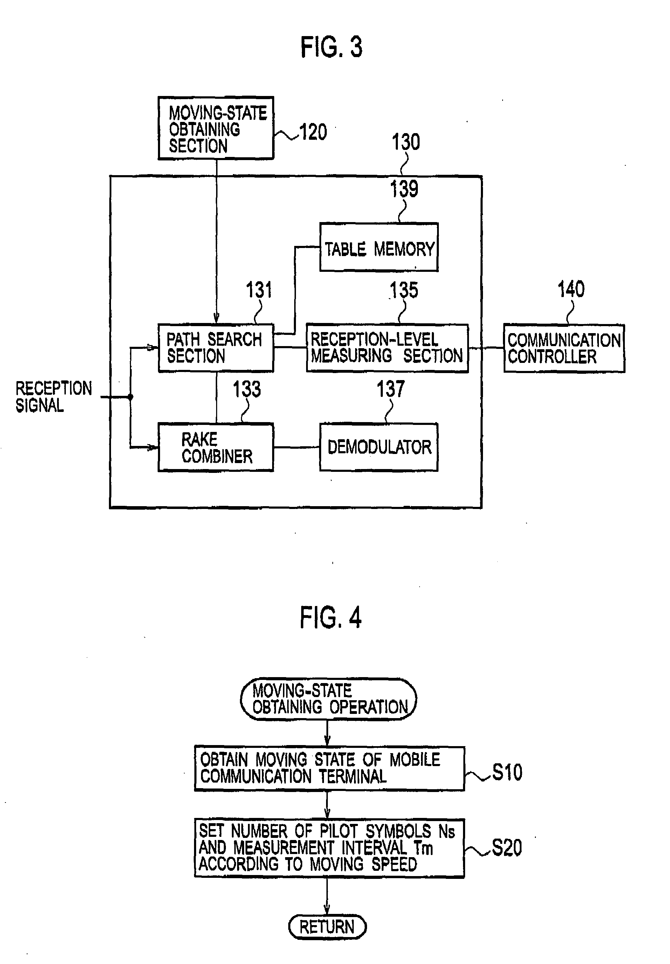

Fig. 3 is a functional block configuration diagram of the signal processor 130. As shown in Fig. 3, the signal processor 130 includes a path search section 131, a RAKE combiner 133, a reception-level measuring section 135, a demodulator 137, and a table memory 139.

The path search section 131 determines the condition for measuring the state of the radio signal S, on the basis of the moving state, that is, the moving velocity $v$, obtained by the moving-state obtaining section 120. In this embodiment, the path search section 131 constitutes a measurement-condition determination section.

Specifically, the path search section 131 obtains a predetermined number of pilot signals P included in the radio signal S, and performs calculation of a despreading correlation value of the radio signal S and measurement of a path timing $T_p$ (see Fig. 7) on the basis of the obtained pilot signals P.

In the present embodiment, particularly, the path search section 131 determines, on the basis of the movement velocity $v$ obtained by the moving-state obtaining section 120, the measurement condition including: the number of pilot symbols P used for estimating the influence of the propagation path of the radio signal S (number of pilot symbols $N_S$); or an interval $Tm$ for measuring the pilot symbol P. Specifically, the path search section 131 determines the number of pilot symbols $N_S$ and the measurement interval $Tm$ in reference to a measurement condition table TB stored in the table memory 139.

Fig. 8 shows one example of the measurement condition table TB according to the present embodiment. As shown in Fig. 8, a moving state, the number of pilot symbols $N_S$, and a measurement interval $Tm$ are associated with each other in the measurement condition table TB. Moreover, three moving states 0 to 2 are defined in the measurement condition table TB. Specifically, defined are: a state in which the mobile communication terminal does not move (hereinafter, referred to simply as a "stopping state") or a state of moving at 100 km/h or less (state 0); a high-speed moving state of moving at over 100 km/h to 200 km/h (state 1): and an extremely high-speed moving state of moving at over 200 km/h (state 2).

In a case where the moving velocity v obtained by the moving-state obtaining section 120 is lower than a certain threshold (such as 100 km/h), the path search section 131 elongates the measurement interval $Tm$ (from 40 ms to 100 ms) and increases the number of pilot symbols $N_S$ (from 6 to 10), in reference to the measurement condition table TB.

In contrast, in the case where the moving velocity $v$ obtained by the moving-state obtaining section 120 is higher than a certain threshold (such as 200 km/h), the path search section 131 decreases the number of pilot symbols $N_s$ (from 6 to 4). Note that, in the case where the moving velocity $v$ obtained by the moving-state obtaining section 120 is higher than a certain threshold (such as 200 km/h), the path search section 131 may shorten the measurement interval $Tm$ (from 40 ms to 30 ms, for example).

The RAKE combiner 133 performs RAKE combining of multipaths MP1 to MP3 (see Fig. 7) by use of the path timing $T_P$ and the despreading correlation value outputted from the path search section 131.

The reception-level measuring section 135 measures a reception level L of the radio signal S. Specifically, the reception-level measuring section 135 measures the reception level L of the radio signal S, at a measurement interval *Tm* notified by the path search section 131.

The demodulator 137 demodulates the reception signal having undergone the RAKE combining by the RAKE combiner 133.

The table memory 139 stores the measurement condition table TB therein.

(Operation of mobile communication terminal)

Next, an explanation will be given for an operation of the mobile communication terminal 100. Specifically, explanations will be given for (1) a moving-state obtaining operation, (2) a path-timing and reception-level obtaining operation, and (3) a demodulation operation.

(1) Moving-state obtaining operation

Fig. 4 is a flow chart of a moving-state obtaining operation of the mobile communication terminal 100. As shown in Fig. 4, a moving state of the mobile communication terminal 100 is obtained in step S10. For example, the mobile communication terminal 100 estimates a moving velocity *v* on the basis of a shift amount of the phase of a pilot symbol P caused by the Doppler shift resulting from a movement of the mobile communication terminal 100.

In step S20, the mobile communication terminal 100 sets, in accordance with the obtained moving velocity *v*, the number of pilot symbols $N_S$ and a measurement interval *Tm*. Specifically, the mobile communication terminal 100 sets the number of pilot symbols $N_S$ and the measurement interval *Tm,* on the basis of the obtained moving velocity *v*, and in reference to the measurement condition table TB (see Fig. 8).

(2) Path-timing and reception-level obtaining operation

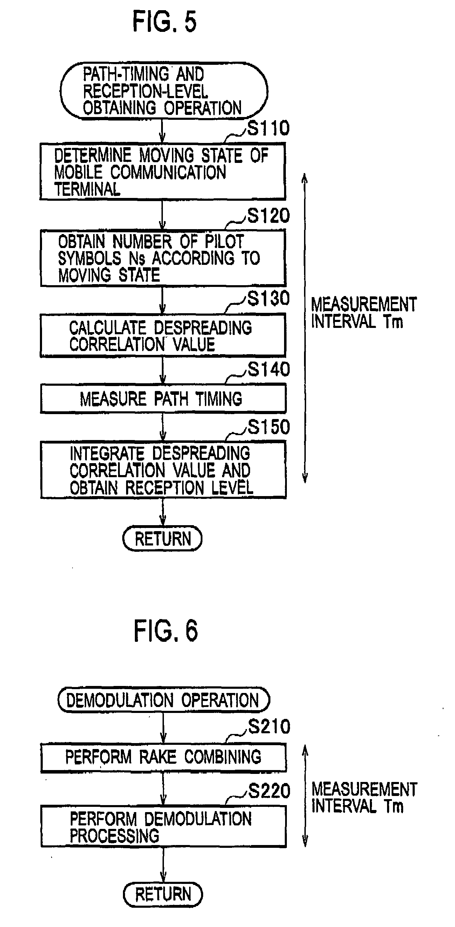

Fig. 5 is a flow chart of a path-timing and reception-level obtaining operation of the mobile communication terminal 100. As shown in Fig. 5, the mobile communication terminal 100 determines the moving state of the mobile communication terminal 100 in step S110. Specifically, the mobile communication terminal 100 determines which of moving states 0 to 2 (see Fig. 8) the mobile communication terminal 100 is in on the basis of the moving velocity *v*.

In step S120, the mobile communication terminal 100 obtains, in reference to measurement condition table TB, the number of pilot symbols $N_s$ in accordance with the determined moving state (any one of states 0 to 2).

In step S130, the mobile communication terminal 100 calculates a despreading correlation value of the radio signal S. Specifically, the mobile communication terminal 100 calculates the despreading correlation value of the radio signal S by use of a predetermined number (6, for example) of pilot symbols P, which corresponds to the number of pilot symbols $N_S$ obtained in step S120.

In step S140, the mobile communication terminal 100 measures a path timing $T_P$ (see Fig. 7). For example, the mobile communication terminal 100 measures a time interval between a multipath MP1 and a multipath MP2.

In step S150, the mobile communication terminal 100 obtains a reception level L of the radio signal S by integrating the calculated despreading correlation value.

The mobile communication terminal 100 repeats the processing of the above-mentioned steps S110 to S150 at a measurement interval *Tm.*

(3) Demodulation operation

Fig. 6 is a flow chart of a demodulation operation of the mobile communication terminal 100. As shown in Fig. 6, in step S210, the mobile communication terminal 100 performs RAKE combining of multipaths MP1 to MP3 by use of the path timing $T_P$ and the despreading correlation value.

In step S220, the mobile communication terminal 100 performs demodulation processing of the reception signal having undergone the RAKE combining.

The mobile communication terminal 100 repeats the processing of the above-mentioned steps S210 and S220 at a measurement interval *Tm.*

(Effect and advantage)

According to the mobile communication terminal 100, a measurement condition including the number of pilot symbols $N_S$ or an interval *Tm* for measuring the state of the radio signal S is determined according to a moving state (moving velocity *v*) of the mobile communication terminal 100.

For this reason, at the time of high-speed movement, the mobile communication terminal 100 can decrease the number of pilot symbols $N_S$, and shorten the interval *Tm* (measurement period) for measuring the radio signal S. Meanwhile, at the time of low-speed movement, the mobile communication terminal 100 can increase the number of pilot symbols $N_S$, and elongate the interval *Tm* for measuring the radio signal S.

In other words, according to the mobile communication terminal 100, accuracy in measuring the path timing $T_P$ and the reception level L can be ensured regardless of the moving velocity *v*, so that communication quality, that is, an SIR, a BLER and throughput, can be improved. Moreover, at the time of low-speed movement, the mobile communication terminal 100 can elongate the interval $T_m$ for measuring the state of the radio signal S. Accordingly, consumption of the battery 150 can be reduced.

In the present embodiment, a measurement condition table TB is employed, the table including the moving state of the mobile communication terminal 100, the number of pilot symbols $N_S$ and a measurement interval $T_m$ in association with each other. Accordingly, conditions for measuring the radio signal S can be easily changed by altering the contents of the measurement condition table TB stored in the table memory 139.

(other embodiments)

Hereinabove, the present invention has been described by way of an embodiment of the present invention. However the present invention is not limited only to the descriptions and drawings constituting a part of the description. With this description, various other embodiments should be apparent to those skilled in the art.

For example, although the number of pilot symbols $N_S$ and a measurement interval $Tm$ are determined by use of the measurement condition table TB in the above embodiment of the present invention, the mobile communication terminal 100 may otherwise determine the number of pilot symbols $N_S$ and the measurement interval $Tm$ by use of the following formulas.

$$\cdot \ N_S = P1/v \ldots \text{(Formula 1)}$$

$$\cdot \ Tm = P2/v \ldots \text{(Formula 2)}$$

Here, $P1$ and $P2$ indicate parameters determined in accordance with the radio communication method employed in the mobile communication system. In addition, $v$ indicates a moving velocity of the mobile communication terminal 100 (in km/h). For example, $P1$ may be set to 800 (km/h), and $P2$ may be set to 8 (sec, km/h). Moreover, in a case of determining the number of pilot symbols $N_S$ and the measurement interval $Tm$ by use of (Formula 1) and (Formula 2), upper and lower limits may be set for the number of pilot symbols $N_s$ and the measurement interval $Tm$.

The above embodiment of the present invention assumed that the mobile communication terminal 100 repeats the moving-state obtaining operation (see Fig. 4) at a prescribed interval and if the pilot symbols $N_s$ or the measurement interval $Tm$ is updated, the mobile communication terminal 100 performs the path-timing and reception-level obtaining operation (see Fig. 5) using the updated pilot symbols $N_s$ or the measurement interval $Tm$. However, the mobile communication terminal 100 may perform the moving-state obtaining operation in the step S110. In this case, the pilot symbols $N_s$ is also set by the moving-state obtaining operation performed in the step S110, the mobile communication terminal 100 skips the step S120.

Although the CDMA system is employed in the above-mentioned mobile communication system of the embodiment, the applicable scope of the invention is not limited to the CDMA system. Additionally, although a radio signal S of the 2 GHz band is employed in the above-mentioned mobile communication system of the embodiment, the frequency band to which the present invention is applicable is not limited to the 2 GHz band.

Thus, the present invention includes, as a matter of course, various embodiments that are not described in the present application. Accordingly, the technical scope of the present invention is only defined by the subject matter sought to be patented according to scope of claims, which are reasonably understood from the above explanation.

**Claims**

1. A mobile communication terminal for receiving a radio signal including a known signal from a radio base station, and then for performing predetermined signal processing according to a state of the received radio signal, wherein the known signal is used for estimating an influence of a propagation path of the received radio signal, and the known signal has a setting value that is known by both a transmitting side and a receiving side, the mobile communication terminal comprising:

   a moving-state obtaining section configured to obtain a moving state of the mobile communication terminal;
   a measurement-condition determination section configured to determine a measurement condition including any one of the number of the known signals and an interval for measuring the radio signal according to the moving state obtained by the moving-state obtaining section; and
   a signal processor configured to perform the signal processing by use of the radio signal under the measurement condition determined by the measurement-condition determination section.

2. The mobile communication terminal according to claim 1, wherein the signal processor performs any one of:

   measurement of a path timing which indicates the time difference between a timing in one of multipaths and a predetermined reference timing; and measurement of a reception level of the radio signal
   and demodulation of the radio signal.

3. The mobile communication terminal according to claim 1, wherein:

the moving-state obtaining section obtains a moving velocity of the mobile communication terminal;

in a case where the moving velocity obtained by the moving-state obtaining section is lower than a predetermined threshold, the measurement-condition determination section increases the number of the known signals used for measuring the state of the radio signal; and

in a case where the moving velocity obtained by the moving-state obtaining section is higher than a predetermined threshold, the measurement-condition determination section decreases the number of the known signals used for measuring the state of the radio signal.

4. The mobile communication terminal according to claim 1, further comprising a measurement condition table in which the moving state, the number of known signals, and the measurement interval are associated with each other, wherein

the measurement-condition determination section determines the measurement condition in reference to the measurement condition table.

5. A mobile communication method for receiving a radio signal including a known signal, and then for performing predetermined signal processing according to a state of the radio signal, wherein the known signal is used for estimating an influence of a propagation path of the received radio signal, and the known signal has a setting value that is known by both a transmitting side and a receiving side the mobile communication method comprising the steps of:

obtaining a moving state of a mobile communication terminal;

determining, according to the obtained moving state, a measurement condition including any one of the number of the known signals and an interval for measuring the radio signal; and

performing the signal processing by use of the radio signal under the determined measurement condition.

## FIG. 1

## FIG. 2

## FIG. 3

MOVING-STATE
OBTAINING
SECTION — 120

130

139

TABLE MEMORY

131    135    140

PATH SEARCH
SECTION

RECEPTION-LEVEL
MEASURING SECTION

COMMUNICATION
CONTROLLER

RECEPTION
SIGNAL

133    137

RAKE
COMBINER

DEMODULATOR

## FIG. 4

MOVING-STATE
OBTAINING OPERATION

OBTAIN MOVING STATE OF MOBILE
COMMUNICATION TERMINAL — S10

SET NUMBER OF PILOT SYMBOLS Ns
AND MEASUREMENT INTERVAL Tm — S20
ACCORDING TO MOVING SPEED

RETURN

## FIG. 5

```
┌─────────────────────────────┐
│  PATH-TIMING AND            │
│  RECEPTION-LEVEL            │
│  OBTAINING OPERATION        │
└─────────────────────────────┘
              │
              │           ⌇S110
              ▼
┌─────────────────────────────┐
│ DETERMINE MOVING STATE OF   │
│ MOBILE COMMUNICATION        │
│ TERMINAL                    │
└─────────────────────────────┘
              │
              │           ⌇S120
              ▼
┌─────────────────────────────┐
│ OBTAIN NUMBER OF PILOT      │
│ SYMBOLS Ns ACCORDING TO     │
│ MOVING STATE                │
└─────────────────────────────┘
              │
              │           ⌇S130
              ▼
┌─────────────────────────────┐
│ CALCULATE DESPREADING       │
│ CORRELATION VALUE           │
└─────────────────────────────┘
              │
              │           ⌇S140
              ▼
┌─────────────────────────────┐
│ MEASURE PATH TIMING         │
└─────────────────────────────┘
              │
              │           ⌇S150
              ▼
┌─────────────────────────────┐
│ INTEGRATE DESPREADING       │
│ CORRELATION VALUE AND       │
│ OBTAIN RECEPTION LEVEL      │
└─────────────────────────────┘
              │
              ▼
       ┌──────────┐
       │  RETURN  │
       └──────────┘
```

MEASUREMENT
INTERVAL Tm

## FIG. 6

```
┌─────────────────────────────┐
│  DEMODULATION OPERATION     │
└─────────────────────────────┘
              │
              │           ⌇S210
              ▼
┌─────────────────────────────┐
│ PERFORM RAKE COMBINING      │
└─────────────────────────────┘
              │
              │           ⌇S220
              ▼
┌─────────────────────────────┐
│ PERFORM DEMODULATION        │
│ PROCESSING                  │
└─────────────────────────────┘
              │
              ▼
       ┌──────────┐
       │  RETURN  │
       └──────────┘
```

MEASUREMENT
INTERVAL Tm

## FIG. 7

## FIG. 8

TB

| | MOVING STATE | NUMBER OF PILOT SYMBOLS Ns USED IN MEASUREMENT | MEASUREMENT INTERVAL Tm |
|---|---|---|---|
| STATE 0 | STOPPING STATE OR MOVING STATE AT 100 km / h OR LOWER | 10 | 100ms |
| STATE 1 | HIGH-SPEED MOVING STATE AT 100 km / h TO 200 km/h | 6 | 40ms |
| STATE 2 | EXTREMELY HIGH-SPEED MOVING STATE AT OVER 200 km / h | 4 | 40ms |

**REFERENCES CITED IN THE DESCRIPTION**

**Patent documents cited in the description**

- JP 2006336279 A
- JP 2007321385 A

- JP 3481101 B